# EUROPÄISCHE PATENTSCHRIFT

(11) **EP 0 438 678 B1**
(45) Veröffentlichungstag und Bekanntmachung des Hinweises auf die Patenterteilung: **03.03.1993**
(21) Anmeldenummer: 90123364.3
(22) Anmeldetag: 06.12.1990
(51) Int. Cl.: B60T 13/66, B60T 17/18, B60T 8/18

(54) **Elektrisch steuerbare Druckmittelbremse für Fahrzeuge**
Electrically controlled fluid pressure brake for vehicles
Dispositif de freinage par fluide sous pression à commande électrique pour véhicules

(30) Priorität: 26.01.1990 DE 4002333
(43) Veröffentlichungstag der Anmeldung: 31.07.1991
(73) Patentinhaber: KNORR-BREMSE AG, 80710 München (DE)
(72) Erfinder: Hommen, Winfried, W-8000 München 80 (DE); Stäuble, Georg, W-8000 München 50 (DE); Störzinger, Thomas, W-8130 Starnberg (DE); Wieser, Tiberius, W-8000 München 50 (DE); Wissler, Thomas, W-8000 München 2 (DE)

(56) Entgegenhaltungen:
- EP-A- 0 173 861
- EP-A- 0 335 532
- GB-A- 1 174 247

## Beschreibung

Die Erfindung betrifft eine elektrisch steuerbare Druckmittelbremse für Fahrzeuge, insbesondere Schienenfahrzeuge, mit einer durch ein elektrisches Bremsanforderungssignal steuerbaren Steuervorrichtung zum Erstellen eines dem Bremsanforderungssignal entsprechenden Bremsdruckes, wobei die Steuervorrichtung eine in Notzuständen, insbesondere bei Stromausfall wirksame Notbremsvorrichtung zur Erstellung eines einer maximalen Bremskraft entsprechenden Notbremsdruckes aufweist, der durch ein elektrisches Fahrzeuglastsignal fahrzeuglastabhängig begrenzt ist, und mit einem Notbremsventil, das einem Bremszylinder im Normalbetrieb den Bremsdruck, im Notzustand unter Absperren des Bremsdruckes den Notbremsdruck zuführt.

Eine derartige Druckmittelbremse ist aus der EP-B-0 173 861 bekannt. Die Notbremsvorrichtung weist hierbei eine von einem Stellmotor über ein Getriebe angetriebene Nockenscheibe auf, welche über einen Stößel die Vorspannung einer einem Druckbegrenzungsventil zugehörenden Regelfeder bestimmt. Der Stellmotor ist fahrzeuglastabhängig steuerbar, derart, daß das Druckbegrenzungsventil den Notbremsdruck lastabhängig begrenzt. Dieser fahrzeuglastabhängig begrenzte Notbremsdruck wird einerseits einem Notbremsventil und andererseits als Speisedruck einem EP-Wandler (Elektro-Druckmittel-Wandler) zum Erstellen des Bremsdruckes zugeführt, welcher ebenfalls zum Notbremsventil geleitet wird. Das Notbremsventil ist als 3/2-Wegemagnetventil ausgebildet, welches im unerregten Zustand den Notbremsdruck, im erregten Zustand dagegen den Bremsdruck einem Bremszylinder zuführt. Diese bekannte Druckmittelbremse benötigt zum fahrzeuglastabhängigen Begrenzen des Notbremsdruckes einen hohen Aufwand an mechanischen und damit verschleißanfälligen Geräten. Ein besonderer Vorteil der bekannten Druckmittelbremse ist darin zu sehen, daß bei Stromausfall die jeweilige Begrenzung des Notbremsdruckes erhalten bleibt, wodurch weiterhin ein der jeweiligen Fahrzeugbelastung entsprechendes, maximales Abbremsen des Fahrzeuges erzielbar ist.

Es ist Aufgabe der Erfindung, eine Druckmittelbremse der eingangs genannten Art derart auszubilden, daß sie unter weitgehendem Vermeiden mechanischer Stellvorrichtungen, insbesondere unter Vermeiden der bekannten Stellnockenvorrichtung, wie die bekannte Druckmittelbremse ein Erhalten der fahrzeuglastabhängigen Begrenzung des Notbremsdruckes auch bei Stromausfall gewährleistet.

Diese Aufgabe wird nach der Erfindung gelöst durch einen das elektrische Fahrzeuglastsignal in einen fahrzeuglastabhängigen Druckmitteldruck umsetzenden, im stromlosen Zustand geschlossenen EP-Wandler und durch ein druckmittelbezogen diesem nachgeschaltetes Begrenzungsventil, das einen vom fahrzeuglastabhängigen Druckmitteldruck entgegen dem den Notbremsventil zuzuführenden Notbremsdruck beaufschlagten Kolben zum Schalten eines Absperrventils aufweist, welches in eine Verbindung von einer einen zum Erreichen einer maximalen Bremsung ausreichenden Druck führenden Druckmittelquelle zu einem den Notbremsdruck führenden Raum eingeordnet ist.

Nach der weiteren Erfindung zweckmäßige Ausgestaltungsmöglichkeiten einer derartigen Druckmittelbremse sind den Unteransprüchen entnehmbar.

Unter dem vorstehend benutzten Ausdruck "EP-Wandler" ist ein Elektro-Druckmittel-Wandler beliebiger Bauart zu verstehen, welcher ein elektrisches Strom- oder Spannungssignal analoger oder digitaler Art in einen entsprechenden Druckmitteldruck umzusetzen vermag.

In der Zeichnung sind Ausführungsbeispiele für nach der Erfindung ausgebildete Druckmittelbremsen dargestellt und zwar zeigt
Fig.1 ein erstes Ausführungsbeispiel
Fig.2 ein zweites Ausführungsbeispiel und
Fig.3 ein Begrenzungsventil

in jeweils schematischer Darstellung.

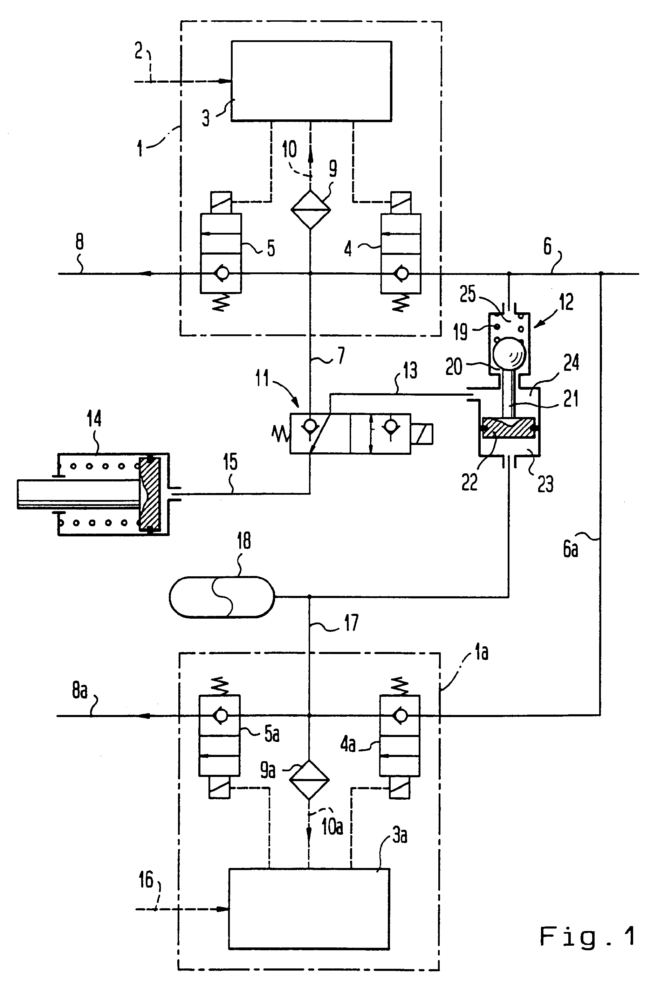

Die Bremsanlage nach Fig.1 weist einen EP-Wandler 1 auf, welchem vermittels einer elektrischen Signalleitung 2 ein elektrisches Bremsanforderungssignal analoger oder digitaler Art zugeführt wird. Der EP-Wandler 1 beinhaltet einen Elektronik 3 und zwei von dieser über gestrichelt eingezeichnete Kabel erregbare 2/2-Wegemagnetventile, deren eines ein Einlaßventil 4 und deren anderes ein Auslaßventil 5 ist. Das Einlaßventil 4 ist aus einer nicht dargestellten Druckmittelquelle über eine Leitung 6 mit Druckmittel versorgt und überwacht die Verbindung dieser Leitung 6 mit einer einen Bremsdruck führenden Leitung 7; das Auslaßventil 5 überwacht eine Verbindung der Leitung 7 zu einer Leitung 8, welche zu einem drucklosen Raum, bei einer Druckluftbremse zur Atmosphäre und bei einer hydraulischen Bremse zum Hydraulik-Vorratsbehälter, führt. Die Leitung 7 ist innerhalb des EP-Wandlers 1 an einen Wandler 9 angeschlossen, welcher den in der Leitung 7 herrschenden Druck in ein elektrisches Signal umsetzt, welches durch eine Signalleitung 10 der Elektronik 3 als Ist-Wert zurückgeführt wird.

Die Leitung 7 führt zu einem als 3/2-Wegemagnetventil ausgebildeten Notbremsventil 11, welches nur in Notzuständen, beispielsweise bei Notbremsgriffbetätigung durch Fahrgäste, bei unbeabsichtigter Zugtrennung, bei Stromausfall und dgl. unerregt ist. An das Notbremsventil 11 sind weiterhin eine es mit einem Begrenzungsventil 12 verbindende Leitung 13 und eine zu einem Bremszylinder 14 führende Leitung 15 angeschlossen. Im erregten Zustand verbindet das Notbremsventil 11 die Leitung 7 mit der Leitung 15 und sperrt die Leitung 13 ab, während es im dargestellten, unerregten Zustand die Leitungen 13 und 15 miteinander verbindet und die Leitung 7 absperrt.

Die Druckmittelquelle ist über eine von der Leitung 6 abzweigende Leitung 6a als Speiseleitung mit einem zweiten EP-Wandler 1a verbunden. Der Aufbau des zweiten EP-Wandlers 1a entspricht demjenigen des EP-Wandlers 1, seine Teile sind mit durch den Buchstaben a ergänzten Bezugszahlen gemäß EP-Wandler 1 bezeichnet. Der EP-Wandler 1a ist derart ausgebildet, daß bei Strom- oder Ansteuersignalausfall, d.h. im stromlosen Zustand sowohl das Einlaßwie das Auslaßventil 4a und 5a geschlossen ist. Der EP-Wandler 1 kann entsprechend ausgebildet sein. Im Unterschied zum EP-Wandler 1 ist der EP-Wandler 1a jedoch durch eine elektrische Signalleitung 16 ansteuerbar, welche ein der Fahrzeugbelastung entsprechendes, analoges oder digitales elektrisches Signal führt, und er steuert demgemäß vermittels seines Einlaßventils 4a bzw. Auslaßventils 5a in eine Leitung 17 einen der Fahrzeugbelastung entsprechenden Druckmitteldruck aus. An die Leitung 17 sind zueinander parallel ein Druckmittelspeicher 18 und das Begrenzungsventil 12 angeschlossen.

Das Begrenzungsventil 12 weist ein von einer Feder 19 in Schließrichtung belastetes Absperrventil 20 auf, welches vermittels eines Stößels 21 von einem Kolben 22 in Offenstellung gehalten werden kann. Der Kolben 22 ist in Öffnungsrichtung des Abpserrventils 20 vom Druck in einem Raum 23 beaufschlagt, der an die Leitung 17 angeschlossen und damit von dem fahrzeuglastabhängigen Druckmitteldruck gefüllt ist. Andererseits begrenzt der Kolben 22 einen Raum 24, welcher an die Leitung 13 angeschlossen ist und welcher durch das Absperrventil 20 mit einem die Feder 19 aufnehmenden und an die Leitung 6 angeschlossenen Raum 25 verbindbar ist.

Während eines normalen Fahrbetriebes ist das Notbremsventil 11 erregt und steuert daher in den aktiv wirkend ausgebildeten, d.h. einen seiner Druckmittelbeaufschlagung entsprechende Bremskraft abgegebenden Zylinder 14 den vom EP-Wandler 1 jeweils ausgesteuerten Bremsdruck ein. Zugleich steuert der EP-Wandler 1a in die Leitung 17 und damit den Druckmittelspeicher 18 sowie den Raum 23 des Begrenzungsventils 12 eine der jeweiligen Fahrzeugbelastung entsprechende Druckhöhe ein. Das Begrenzungsventil 12 hält sein Absperrventil 20 daher derart und solange geöffnet, bis aus der Leitung 16 durch das geöffnete Absperrventil 20 in den Raum 24 und die Leitung 13 ein der jeweiligen Fahrzeugbelastung entsprechender, als Notbremsdruck zu bezeichnender Druckmitteldruck eingespeist ist; anschließend senkt sich der Kolben 22 zum Schließen des Absperrventils 20 ab.

In Notzuständen wird, wie vorstehend bereits erwähnt, das Notbremsventil 11 entregt, wobei es den in der Leitung 13 anstehenden Notbremsdruck dem Bremszylinder 14 zuführt; der Druckmittelverbrauch aus der Leitung 13 wird dabei durch zeitweiliges Öffnen des Absperrventils 20 nachgespeist. Bei Beendigen der Notsituation wird das Notbremsventil 11 wieder erregt, der im Bremszylinder 14 herrschende Notbremsdruck kann über den EP-Wandler 1 abgebaut werden.

Bei Stromausfall geht der EP-Wandler 1a jedenfalls in seinen die Leitung 17 sowohl von der Leitung 6a wie von der Leitung 8a absperrenden, geschlossenen Zustand über, der jeweilige, in die Leitung 17 und den Druckmittelspeicher 18 eingesteuerte, fahrzeuglastabhängige Druckmitteldruck bleibt somit erhalten und steuert durch das Begrenzungsventil 12 in die Leitung 13 einen entsprechenden, fahrzeuglastabhängig begrenzten Notbremsdruck aus. Durch den Druckmittelspeicher 18 wird dabei gewährleistet, daß der in der Leitung 17 herrschende, fahrzeuglastabhängige Druckmitteldruck auch über längere, stromlose Zeitspannen sicher erhalten bleibt. Bei Vorliegen eines umfassenden Stromausfalls wird auch das Notbremsventil 11 entregt, es ergibt sich also, wie vorstehend beschrieben, eine Notbrmsung mit einem fahrzeuglastabhängig begrenzten Notbremsdruck aus der Leitung 13. Falls jedoch der Stromausfall lediglich den EP-Wandler 1a und/oder die elektrische Signalerstellung für die Signalleitung 16 betrifft, kann das Notbremsventil 11 erregt bleiben und es können weiterhin Bremssteuervorgänge durch den EP-Wandler 1 bewirkt werden.

Das in der Signalleitung 16 anstehende, fahrzeuglastabhängige Signal kann in aus Fig.1 nicht ersichtlicher Weise auch dem EP-Wandler 1 oder einer Vorrichtung zugeführt werden, welche das in der Signalleitung 2 anstehende Bremsanforderungssignal erstellt; bei beiden Ausführungen kann das fahrzeuglastabhängige Signal dazu verwendet werden, daß der EP-Wandler 1 in die Leitung 7 einen Bremsdruck aussteuert, der der jeweils vorliegenden Fahrzeugbelastung entsprechend moduliert ist. In Abänderung zum beschriebenen Ausführungsbeispiel ist es auch möglich, dem EP-Wandler 1 als Speisedruck nicht den Druck der Druckmittelquelle, sondern ähnlich wie bei der erwähnten EP-B-0 173 861 den fahrzeuglastabhängig begrenzten Notbremsdruck aus der Leitung 13 oder auch den Druckmitteldruck aus der Leitung 17 zuzuführen.

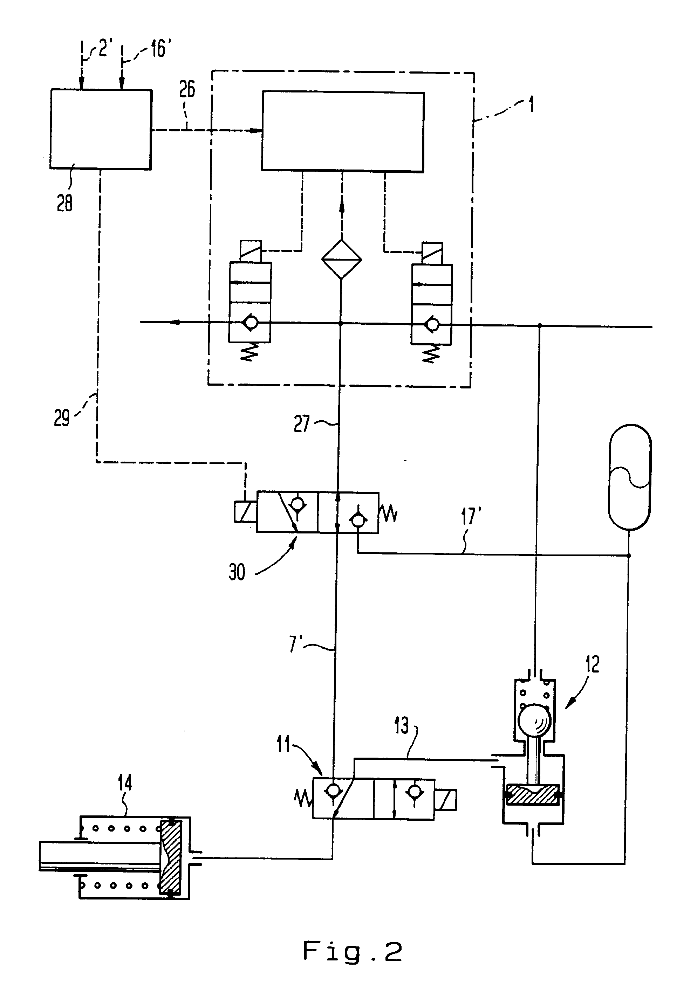

Bei der Druckmittelbremse nach Fig.2 ist lediglich ein EP-Wandler 1 vorgesehen, dessen Aufbau demjenigen nach Fig.1 entspricht, welcher jedoch abweichend von einem elektrischen Sollwert-Signal in einer Signalleitung 26 ansteuerbar ist und in eine Leitung 27 einen diesem Sollwert-Signal entsprechenden Druckmitteldruck aussteuert. Das in der Signalleitung 2′ anstehende Bremsanforderungssignal und das in der Signalleitung 16′ anstehende, fahrzeuglastabhängige Signal werden einer Elektronik 28 zugeführt, welche das Soll-Signal in die Signalleitung 26 einspeist. Bei Anstehen eines einer Bremsung entsprechenden Bremsanforderungssignals in der Signalleitung 2′ steuert die Elektronik 28 dieses Bremsanforderungssignal in die Signalleitung 26 ein, bei Anstehen eines gelösten Bremsen entsprechenden Bremsanforderungssignals und gff. eines weiteren, über eine nicht gezeigte Signalleitung zuzuführenden Signals für einen bestimmten Fahrzustand führt die Elektronik 26 dagegen der Signalleitung 26 das in der Signalleitung 16′ anstehende, fahrzeuglastabhängige Signal zu. Das weitere Signal kann in Abhängigkeit vom Öffnungs- bzw. Schließzustand der Fahrzeugtüren, von der Fahrt bzw. Stillstand des Fahrzeuges oder von der Betätigung einer nicht dargestellten Haltebremse erstellbar sein; die Elektronik 28 ist dabei derart auszubilden, daß sie nur bei offenen Fahrzeugtüren, bei Fahrzeugstillstand und/oder bei betätigter Feststellbremse der Signalleitung 26 das fahrzeuglastabhängige Signal zuführen kann, andernfalls jedoch jedenfalls das Bremsanforderungssignal zuführt. Die Feststellbremse kann hierbei eine gesonderte, nicht dargestellte Bremse sein, es kann aber auch durch willkürliches Entregen der Notbremsventils 11 bei Fahrzeugstillstand eine Festellbremsung bewirkt werden. Bei einer derartigen Ausführung der Elektronik 28 kann die vorstehend erwähnte Abhängigkeit vom Anstehen eines betätigten bzw. gelösten Bremsen entsprechenden Bremsanforderungssignals gff. entfallen. Weiterhin führt von der Elektronik 28 eine Schaltleitung 29 zu einem als 3/2-Wegemagnetventil ausgebildeten Umschaltventil 30, wobei die Spannungs- bzw. Stromführung der Schaltleitung 29 durch die Elektronik 28 derart überwacht ist, daß das Umschaltventil 30 nur bei in der Signalleitung 26 anstehendem fahrzeuglastabhängigen Signal erregt ist. Im dargestellten, unerregten Zustand verbindet das Umschaltventil 30 die Leitung 27 mit der den Bremsdruck führenden Leitung 7′, während es im erregten Zustand die Leitung 27 mit der den fahrzeuglastabhängigen Druckmitteldruck führenden Leitung 17′ verbindet. Im weiteren, hinsichtlich des Notbremsventils 11, des Bremszylinders 14, des Begrenzungsventils 12 und des Druckmittelspeichers 18, entspricht die Druckmittelbremse nach Fig.2 derjenigen nach Fig.1, so daß sich weitere Erläuterungen erübrigen.

Während des normalen Fahrbetriebes, bei geschlossenen Fahrzeugtüren, in Fahrt befindlichem Fahrzeug und/oder unbetätigter Feststellbremse speist die Elektronik 28 in die Signalleitung 26 jedenfalls das in der Signalleitung 2′ anstehende Bremsanforderungssignal ein, so daß der EP-Wandler 1 in die Leitung 27 einen entsprechenden Bremsdruck aussteuert, der durch das unerregte Umschaltventil 30, die Leitung 7′ und das erregte Notbremsventil 11 zum Bremszylinder 14 gelangt. In Notfällen wird das Notbremsventil 11 entregt, so daß dem Bremszylinder 14 durch das Notbremsventil 11 ein in der Leitung 13 anstehender, fahrzeuglastabhängig begrenzter Notbremsdruck zugeführt wird, wie es zu Fig .1 vorstehend beschrieben ist.

Bei gelösten Bremsen entsprechendem Bremsanforderungssignal in der Signalleitung 2′ und gff. geöffneten Fahrzeugtüren, stillstehendem Fahrzeug und/oder betätigter Feststellbremse entsprechendem, weiteren Signal bewirkt das von der Elektronik 28 in die Signalleitung 26 eingesteuerte, fahrzeuglastabhängige Signal, daß der EP-Wandler 1 gemäß Fig.2 in die Leitung 27 einen fahrzeuglastabhängigen Druckmitteldruck aussteuert. Da die Elektronik 28 zugleich durch die Schaltleitung 29 das Umschaltventil 30 erregt, wird dieser fahrzeuglastabhängige Druckmitteldruck aus der Leitung 27 in die Leitung 17′ eingespeist und füllt den Druckmittelspeicher 18 sowie steuert das Begrenzungsventil 12, wie es bereits zu Fig.1 beschrieben wurde. Bei Rückschaltung der Elektronik 28, derart, daß diese in die Signalleitung 26 wiederum das Bremsanforderungssignal einsteuert, trennt das Umschaltventil 30 die Leitung 17′ von der Leitung 27 ab und der im Druckmittelspeicher 18 herrschende, der augenblicklichen Fahrzeugbelastung entsprechende Druckmitteldruck bleibt erhalten und begrenzt über das Begrenzungsventil 12 den in der Leitung 13 herrschenden Notbremsdruck fahrzeuglastabhängig, wie es vorstehend bereits zu Fig.1 berschrieben wurde.

In Abänderung zu den vorstehend beschriebenen Ausführungsbeispielen kann das Begrenzungsventil 12 zusätzlich zu seinem Absperrventil 20 mit einem nicht dargestellten Auslaßventil versehen werden, durch welches der in der Leitung 13 herrschende Notbremsdruck bei Verminderung des im Druckmittelspeicher 18 anstehenden fahrzeuglastabhängigen Druckes abbaubar ist; das Auslaßventil und das Absperrventil 20 können dabei, wie allgemein üblich, zu einem Doppelventil zusammengefaßt werden.

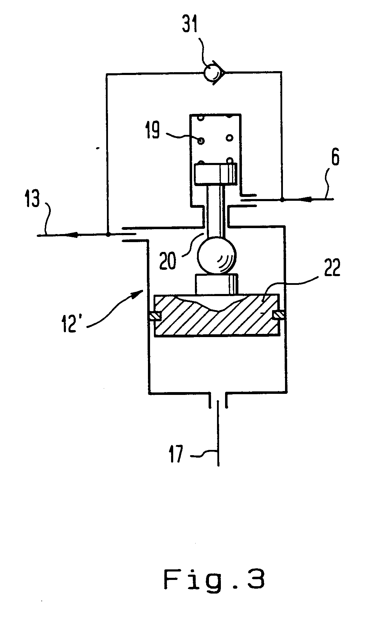

Falls die Druckmittelbremse nach Fig.1 oder 2 nicht mit einem direktwirkenden Bremszylinder 14, sondern mit einem indirekt wirkenden Federspeicherbremszylinder ausgestattet ist, ist in entsprechender Umkehrung an die Leitung 8 eine Druckmittelquelle und an die Leitung 6 die Atmosphäre bzw. der drucklose Hydraulikvorratsbehälter anzuschließen; die Leitung 6a ist entsprechend an die Leitung 8 und die Leitung 8a an die Leitung 6 anzuschließen. Falls auch der Druckmitteldruck in der Leitung 17 bzw. 17′ indirekt, d.h. umgekehrt proportional zur Fahrzeugbelastung gesteuert wird, ist anstelle des Begrenzungsventils 12 ein Begrenzungsventil 12′ gemäß Fig.3 einzuordnen.

Das Begrenzungsventil 12′ gemäß Fig.3 unterscheidet sich dadurch von dem in Fig.1 dargestellten Begrenzungsventil 12, daß das Absperrventil 20 vom Kolben 22 in Schließrichtung und von der Feder 19 in Öffnungsrichtung belastet ist und daß das Absperrventil 20 von einem sich in Strömungsrichtung zur Leitung 13 öffnenden Rückschlagventil 31 überbrückt ist. Durch diese Umgestaltung wird erreicht, daß durch das Begrenzungsventil 12′ ein Druckabbau aus der den Notbremsdruck führenden Leitung 13 durch das Abpserrventil 20 zur zu einem drucklosen Raum führenden Leitung 6 nur in einem durch den umgekehrt fahrzeuglastabhängigen Druckmitteldruck begrenzten Maß möglich ist; der fahrzeuglastabhängige Druckmitteldruck wird durch die Leitung 17 zugeführt. Da der Federspeicherbremszylinder seine Bremskraft bei Druckabsenkungen entwickelt, wird hierdurch die von ihm abgebbare Bremskraft fahrzeuglastabhängig begrenzt. Durch das Rückschlagventil 31 wird ausgeschlossen, daß der Notbremsdruck in der Leitung 13 durch irgendwelche Umstände unter den in der Leitung 6 herrschenden Druck abfallen kann, was insbesondere bei hydraulischen Anlagen zu Störungen führen könnte.

In Abänderung zu Fig.3 kann auch das Begrenzungsventil 12′, wie zum Begrenzungsventil 12 beschrieben, mit einem Doppelventil ausgestattet werden, durch dessen nicht dargestellten Teil der in der Leitung 13 anstehende Notbremsdruck bei Fahrzeuglastverminderung wieder anhebbar ist.

### Kurzfassung:

Die elektrisch steuerbare Druckmittelbremse weist einen EP-Wandler (1) zum Umsetzen eines elektrischen Bremsanforderungssignals in einen Bremsdruck auf. Durch ein Notbremsventil (11) wird im Normalfall dieser Bremsdruck, in Notzuständen ein durch ein Begrenzungsventil (12) fahrzeuglastabhängig begrenzter Notbremsdruck einem Bremszylinder (14) zugeführt. Zur fahrzeuglastabhängigen Begrenzung des Notbremsdruckes ist ein zweiter EP-Wandler (1a) vorgesehen, welcher aus einem fahrzeuglastabhängigen, elektrischen Signal einen fahrzeuglastabhängigen Druckmitteldruck erstellt, welcher in einem Druckmittelspeicher (18) gespeichert und dem Begrenzungsventil (12) zu dessen Steuerung zugeführt wird. Der zweite EP-Wandler (1a) ist im stromlosen Zustand geschlossen, bei Stromausfall bleibt daher der fahrzeuglastabhängige Druckmitteldruck erhalten und das Begrenzungsventil (12) vermag somit den Notbremsdruck weiterhin fahrzeuglastabhängig zu begrenzen.

In einer weiteren, durch ein Umschaltventil ergänzten Ausführungsform kann nur ein EP-Wandler vorgesehen sein, welcher der Erstellung sowohl des Bremsdruckes als auch des fahrzeuglastabhängigen Druckmitteldruckes dient.

## Patentansprüche

1. Elektrisch steuerbare Druckmittelbremse für Fahrzeuge, insbesondere Schienenfahrzeuge, mit einer durch ein elektrisches Bremsanforderungssignal ansteuerbaren Steuervorrichtung zum Erstellen eines dem Bremsanforderungssignal entsprechenden Bremsdruckes, wobei die Steuervorrichtung eine in Notzuständen, insbesondere bei Stromausfall wirksame Notbremsvorrichtung zum Erstellen eines einer maximalen Bremskraft entsprechenden Notbremsdruckes aufweist, der durch ein elektrisches Fahrzeuglastsignal fahrzeuglastabhängig begrenzt ist, und mit einem Notbremsventil (11), das einem Bremszylinder (14) im Normalbetrieb den Bremsdruck, im Notzustand unter Absperren des Bremsdruckes den Notbremsdruck zuführt, gekennzeichnet durch einen das elektrische Fahrzeuglastsignal in einen fahrzeuglastabhängigen Druckmitteldruck umsetzenden, im stromlosen Zustand geschlossenen EP-Wandler (Elektro - Druckmittel - Wandler) (1a;1) und durch ein druckmittelbezogen diesem nachgeschaltetes Begrenzungsventil (12;12′), das einen vom fahrzeuglastabhängigen Druckmitteldruck entgegen dem den Notbremsventil (11) zuzuführenden Notbremsdruck beaufschlagten Kolben (22) zum Schalten eines Absperrventils (20) aufweist, welches in eine Verbindung von einer einen zum Erreichen einer maximalen Bremsung ausreichenden Druck führenden Druckmittelquelle (Leitung 6) zu einem den Notbremsdruck führenden Raum (Leitung 13) angeordnet ist.

2. Druckmittelbremse nach Anspruch 1, dadurch gekennzeichnet, daß ein vom fahrzeuglastabhängigen Druckmitteldruck beaufschlagbarer Druckmittelspeicher (18) vorgesehen ist.

3. Druckmittelbremse nach Anspruch 1 oder 2, dadurch gekennzeichnet, daß das Notbremsventil (11) ein 3/2-Wegemagnetventil ist, das dem Bremszylinder (14) im unerregten Zustand den Notbremsdruck, im erregten Zustand den Bremsdruck zuführt.

4. Druckmittelbremse nach Anspruch 1, 2 oder 3, dadurch gekennzeichnet, daß zwei EP-Wandler (1,1a) vorgesehen sind, deren einer EP-Wandler (1) der bremsanforderungssignalabhängigen Erstellung des Bremsdruckes dient und deren anderer EP-Wandler (1a) der den fahrzeuglastabhängigen Druckmitteldruck erstellende EP-Wandler ist.

5. Druckmittelbremse nach Anspruch 1, 2 oder 3, dadurch gekennzeichnet, daß ein gemeinsamer EP-Wandler (1) zum Erstellen sowohl des Bremsdruckes als auch des fahrzeuglastabhängigen Druckmitteldruckes vorgesehen ist (Fig.2).

6. Druckmittelbremse nach Anspruch 5, dadurch gekennzeichnet, daß dem gemeinsamen EP-Wandler (1) zumindest bei Anstehen eines einer Bremsung entsprechenden Bremsanforderungssignals dieses Bremsanforderungssignal, bei Anstehen eines gelösten Bremsen entsprechenden Bremsanforderungssignals und gff. eines weiteren, für einen bestimmten Fahrzustand kennzeichnenden Signals das elektrische Fahrzeuglastsignal zugeführt wird, und daß der Ausgang (Leitung 27) des EP-Wandlers (1) vermittels eines Umschaltventils (30) bei an ihm anliegenden Bremsanforderungssignal mit dem Notbremsventil (11), bei anliegendem Fahrzeuglastsignal mit einem den fahrzeuglastabhängigen Druckmitteldruck führenden Raum (Leitung 17′) verbunden ist.

7. Druckmittelbremse nach Anspruch 6, dadurch gekennzeichnet, daß das Fahrzeug eine vom Bremsdruck unabhängige Feststellbremse aufweist, und daß das den bestimmten Fahrzustand kennzeichnende Signal ein geöffnete Fahrzeugtüren und/oder eingelegter Feststellbremse entsprechendes Signal ist.

8. Druckmittelbremse nach Anspruch 6 oder 7, dadurch gekennzeichnet, daß das Umschaltventil (30) ein 3/2-Wegemagnetventil ist, das nur bei am EP-Wandler (1) anliegendem Fahrzeuglastsignal erregt ist und den Ausgang (Leitung 27) des EP-Wandlers (1) im erregten Zustand mit dem den fahrzeuglastabhängigen Druckmitteldruck führenden Raum (Leitung 17′), im unerregten Zustand mit dem Notbremsventil (11) verbindet.

9. Druckmittelbremse nach einem oder mehreren der vorstehenden Ansprüche 1 bis 8, wobei der Bremszylinder (14) direkt wirkend und der fahrzeuglastabhängige Druckmitteldruck der Fahrzeugbelastung direkt proportional ist, dadurch gekennzeichnet, daß der fahrzeuglastabhängige Druckmitteldruck den Kolben (22) des Begrenzungsventils (12) in Öffnungsrichtung des Absperrventils (20) beaufschlagt.

10. Druckmittelbremse nach einem oder mehreren der vorstehenden Ansprüche 1 bis 8, wobei der Bremszylinder ein indirekt wirkender Federspeicherzylinder ist, dadurch gekennzeichnet, daß der fahrzeuglastabhängige Druckmitteldruck umgekehrt proportional zur Fahrzeugbelastung ist und den Kolben (22) des Begrenzungsventils (12′) in Schließrichtung des Absperrventils (20) beaufschlagt.

## Claims

1. Electrically controllable fluid-actuated brake for vehicles, in particular rail vehicles, having a control device controllable by an electrical brake demand signal for the provision of a brake pressure corresponding to the brake demand signal, the control device having an emergency brake device, effective in situations of emergency, in particular with power failure, for the provision of an emergency brake pressure corresponding to a maximum brake power, the emergency brake pressure being limited by an electrical vehicle load signal in a manner which is dependent on the vehicle load, and having an emergency brake valve (11) which in normal operation supplies the brake pressure and in a situation of emergency supplies the emergency brake pressure, while blocking off the brake pressure, to a brake cylinder (14), characterized by an EP-converter (electro/fluid-pressure converter) (1a;1), converting the electrical vehicle load signal into a fluid pressure dependent on the vehicle load and closed in the currentless state, and by a limiting valve (12;12′) connected after the EP-converter in relation to the fluid, the limiting valve having a piston (22), loaded by the fluid pressure dependent on the vehicle load against the emergency brake pressure to be supplied to the emergency brake valve (11), for the switching of a blocking valve (20), which is arranged into a connection from a fluid source (line 6) controlling a pressure sufficient for achieving a maximum braking to a chamber (line 13) controlling the emergency brake pressure.

2. Fluid-actuated brake according to claim 1, characterized in that there is provided a fluid reservoir (18) which can be loaded by the fluid pressure dependent on the vehicle load.

3. Fluid-actuated brake according to claim 1 or 2, characterized in that the emergency brake valve (11) is a 3/2-way solenoid valve which in the unexcited state supplies the emergency brake pressure and in the excited state supplies the brake pressure to the brake cylinder (14).

4. Fluid-actuated brake according to claim 1, 2 or 3, characterized in that two EP-converters (1,1a) are provided, the one EP-converter (1) serving for the brake-pressure provision dependent on the brake demand signal and the other EP-converter (1a) being the EP-converter providing the fluid pressure dependent on the vehicle load.

5. Fluid-actuated brake according to claim 1, 2 or 3, characterized in that a common EP-converter (1) is provided for the provision of both the brake pressure and the fluid pressure dependent on the vehicle load (Figure 2).

6. Fluid-actuated brake according to claim 5, characterized in that at least in the presence of a brake demand signal corresponding to a braking, this brake demand signal, and in the presence of a brake demand signal corresponding to released brakes and perhaps of a further signal characteristic for a certain driving condition, the electrical vehicle load signal is supplied to the common EP-converter (1), and in that the output (line 27) of the EP-converter (1) is connected by means of a changeover valve (30) to the emergency brake valve (11) on application of a brake demand signal to the changeover valve, and to a chamber (line 17′) conveying the fluid pressure dependent on the vehicle load on application of an applied vehicle load signal.

7. Fluid-actuated brake according to claim 6, characterized in that the vehicle has a parking brake independent of the brake pressure, and in that the signal characterizing the particular driving state is a signal corresponding to opened vehicle doors and/or applied parking brake.

8. Fluid-actuated brake according to claim 6 or 7, characterized in that the changeover valve (30) is a 3/2-way solenoid valve which is only excited with vehicle load signal applied to the EP-converter (1) and connects the output (line 27) of the EP-converter (1) in the excited state to the chamber (line 17′) conveying the fluid pressure dependent on the vehicle load and in the unexcited state to the emergency brake valve (11).

9. Fluid-actuated brake according to one or more of the above claims 1 to 8, with the brake cylinder (14) acting directly and the fluid pressure dependent on the vehicle load being directly proportional to the vehicle loading, characterized in that the fluid pressure dependent on the vehicle load loads the piston (22) of the limiting valve (12) in the opening direction of the blocking valve (20).

10. Fluid-actuated brake according to one or more of the above claims 1 to 8, with the brake cylinder being an indirectly acting spring store cylinder, characterized in that the fluid pressure dependent on the vehicle load is in inverse proportion to the vehicle loading and loads the piston (22) of the limiting valve (12′) in the closing direction of the blocking valve (20).

## Revendications

1. Frein à milieu sous pression et à commande électrique pour des véhicules, en particulier pour des véhicules sur rails, avec un dispositif de commande susceptible d'être attaqué par un signal électrique de demande de freinage, en vue de l'établissement d'une pression de freinage qui correspond au signal de demande de freinage, le dispositif de commande comportant un dispositif de signal d'alarme agissant dans des situations d'urgence, en particulier lorsque le courant fait défaut, pour l'établissement d'une pression de freinage d'urgence qui correspond à une force de freinage maximale et qui est limitée en fonction de la charge du véhicule par un signal électrique correspondant à la charge du véhicule, et avec une soupape de frein qui alimente un cylindre de frein (14) avec la pression de freinage, dans le cas du fonctionnement normal et avec la pression de freinage de secours ou d'urgence, dans le cas d'un état d'urgence et avec suppression de la pression de freinage, caractérisé par un transducteur électro-milieu sous pression convertissant le signal électrique qui correspond à la charge du véhicule en une pression du milieu sous pression qui est fonction de la charge du véhicule et qui est fermé à l'état d'absence de courant, et par une soupape de limitation (12, 12′) opérant en fonction du milieu sous pression et montée en aval dudit transducteur, ladite soupape de limitation (12, 12′) comportant un piston (22) chargé par la pression du milieu sous pression qui est fonction de la charge du véhicule, et à l'encontre de la pression du freinage d'urgence à appliquer à la soupape de frein d'urgence ou de secours (11), en vue de commuter une soupape d'arrêt (20) qui est montée dans une liaison prévue entre une source en milieu sous pression (conduite 16) qui est à une pression qui est suffisante pour que soit obtenue un freinage maximum, et une chambre (conduite 13) dans laquelle règne la pression de freinage d'urgence ou de secours.

2. Frein à milieu sous pression selon la revendication 1, caractérisé par le fait qu'il est prévu un accumulateur du milieu sous pression (8), qui est chargé par la pression du milieu sous pression, en fonction de la charge du véhicule.

3. Frein à milieu sous pression selon la revendication 1 ou 2, caractérisé par le fait que la soupape de freinage d'urgence (11) est constituée par une électrovanne à 3/2 voies qui alimente le cylindre de frein (14) à l'état désexcité, à la pression de freinage d'urgence et, à l'état excité, à la pression de freinage.

4. Frein à milieu sous pression selon la revendication 1, 2 ou 3, caractérisé par le fait que sont prévus deux transducteurs électro-milieu sous pression (1, 1a) dont l'un (1) sert à établir la pression de freinage en fonction du signal de demande du freinage, et dont le second (1a) est le transducteur électro-milieu sous pression qui établit la pression du milieu sous pression en fonction de la charge du véhicule.

5. Frein à milieu sous pression selon la revendication 1, 2 ou 3, caractérisé par le fait qu'il est prévu un transducteur électro-milieu sous pression commun (1) pour établir aussi bien la pression de freinage que la pression du milieu sous pression qui est fonction de la charge du véhicule (figure 2).

6. Frein à milieu sous pression selon la revendication 5, caractérisé par le fait qu'on applique au transducteur commun (1), au moins dans le cas de la présence d'un signal de demande de freinage qui correspond à un freinage, ce signal de demande de freinage, dans le cas de la présence d'un signal de commande de freinage qui correspond aux freins désserrés et éventuellement d'un signal supplémentaire caractéristique de l'état de roulement déterminé, le signal de charge du véhicule, est que la sortie (conduite 27) du convertisseur (1) est reliée, par l'intermédiaire d'une soupape d'inversion (30) lorsqu'il lui est appliqué le signal de demande de freinage, à la soupape de freinage d'urgence ou de secours (11), alors que lorsqu'il lui est appliqué le signal de la charge du véhicule, à une chambre (conduite 17′) dans laquelle règne la pression du milieu sous pression, qui est fonction de la charge du véhicule.

7. Frein à milieu sous pression selon la revendication 6, caractérisé par le fait que le véhicule comporte un frein d'immobilisation qui est indépendant de la pression de freinage, et que le signal qui caractérise un état de roulement déterminé est un signal qui correspond à des ouvertures de portes du véhicule et/ou à l'application du frein d'immobilisation.

8. Frein à milieu sous pression selon la revendication 6 ou 7, caractérisé par le fait que la soupape d'inversion (30) est constituée par une électro-vanne à 3/2 voies qui n'est excitée que lorsque le signal de la charge du véhicule est appliqué au transducteur (1) et relie la sortie (conduite 27) du transducteur (1), à l'état excité, avec la chambre (conduite 17′) dans laquelle règne la pression du milieu sous pression qui dépend de la charge du véhicule, et, à l'état désexcité, à la soupape de freinage d'urgence ou de secours (11).

9. Frein à milieu sous pression selon une ou plusieurs des revendications précédentes 1 à 8, dans lequel le cylindre de frein (14) est à action directe et la pression du milieu sous pression, qui dépend de la charge du véhicule, est directement proportionnelle à la charge de ce dernier, caractérisé par le fait que la pression du milieu sous pression, qui dépend de la charge du véhicule, charge le piston de la soupape de limitation (12) dans le sens de l'ouverture de la soupape d'arrêt (20).

10. Frein à milieu sous pression selon une ou plusieurs des revendications précédentes 1 à 8, dans lequel le cylindre de frein est un cylindre à ressort à accumulation à action indirecte, caractérisé par le fait que la pression du milieu sous pression, qui dépend de la charge du véhicule, est inversement proportionnelle à la charge du véhicule et charge le piston (22) de la soupape de limitation (12′) dans la direction de la fermeture de la soupape d'arrêt (20).
